# EUROPEAN PATENT SPECIFICATION

(11) **EP 4 307 896 B1**
(45) Date of publication and mention of the grant of the patent: **05.03.2025**
(21) Application number: 22716030.6
(22) Date of filing: 17.03.2022
(51) Int. Cl.: A01N 43/56, A01N 25/30, A01N 25/04, A01P 7/00, A01N 51/00, A01P 3/00

(54) **NEW OIL SUSPENSION CONCENTRATE COMPOSITION**
NEUE ÖLSUSPENSIONSKONZENTRATZUSAMMENSETZUNG VON CHLORANTRANILIPROL
NOUVELLE COMPOSITION DE CONCENTRÉ DE SUSPENSION D'HUILE DE CHLORANTRANILIPROLE

(30) Priority: 17.03.2021 EP 21163273; 23.03.2021 EP 21164348
(43) Date of publication of application: 24.01.2024
(73) Proprietor: Syngenta Crop Protection AG, 4058 Basel (CH)
(72) Inventor: KOH, Kevin S. V., Singapore 117406 (SG)
(74) Representative: SYNGENTA IP
(86) International application number: PCT/EP2022/056940
(87) International publication number: WO 2022/194992

(56) References cited:
- CN-A- 109 452 267
- CN-A- 111 436 442
- US-A1- 2010 130 364
- US-A1- 2012 004 104
- US-A1- 2015 296 771
- MELO ADRIANO ARRUÉ ET AL: "Impact of tank-mix adjuvants on deposit formation, cuticular penetration and rain-induced removal of chlorantraniliprole", CROP PROTECTION, ELSEVIER SCIENCE, GB, vol. 78, 27 September 2015 (2015-09-27), pages 253 - 262, XP029290731, ISSN: 0261-2194, DOI: 10.1016/J.CROPRO.2015.09.021

## Description

### Technical Field

The present invention relates to a new oil suspension concentrate composition for direct application into the water of a paddy rice field and to processes for preparing such compositions.

### Background

Paddy field farming remains the dominant form of growing rice in modern times. A paddy field is a flooded field of arable land used for growing semiaquatic crops, most notably rice . Protecting rice plants in paddy fields against insect pests such as rice stem borer, rice leaf folder, early sucking pest is very labor intensive. Most insecticidal commercial products on the market require an applicator to walk through the paddy field which takes typically approximately 5 hours per hectare paddy field. This is for example the case for foliar applications with a backpack sprayer or when distributing granules where the plants grow. This also means that there is a significant cost for the farmer involved in this process.

Hence, it is the aim of this invention to provide a new type of insecticidal composition which will make the application of insecticides in paddy fields much easier. Furthermore, it is also the aim of this invention to provide a new composition comprising a combination of thiamethoxam and chlorantraniliprole which is as effective as the current commercial product but uses significantly less insecticide. This is a further important benefit of the current invention as it is always the aim to use as little of insecticides as possible in view of environmental concerns.

CN 111 436 442 A and CN 109 452 267 A disclose oil suspension concentrates comprising chlorantraniliprole.

US 2012/004104 A1 discloses an oil dispersion concentrate comprising neonicotinoid e.g. thiamethoxam and optionally a further active such as chloroantraniliprole.

### Description of the embodiments

The present invention provides a new insecticidal composition specifically designed for paddy fields which is applied directly as liquid into the water of the paddy field. The rice grower does not need to go into the field but can simply "splash" the composition into the paddy field from the edge of the paddy field. Such a composition needs to pass many difficult technical hurdles:
- One requirement is that the active ingredient(s) are stem or root systemic, i.e. the active ingredient needs to be able to enter the plant via the stem or root system and then be able to distribute throughout the plant as there is no foliar absorption possible.
- Another requirement is that active ingredient(s) need to spread throughout the paddy field. If the active ingredient(s) does not to spread throughout the paddy field, then the direct application of the active ingredient(s) into water is not possible.
- A further requirement is that the active ingredient(s) are present in the form of a stable suspension otherwise the active ingredient particles will be lost in the soil when they start to sediment.
- Also a requirement is that the active ingredient has to be suspended fine enough so that it can be absorbed efficiently by the plants and does not crystallize or drop out whilst the product is in use or the efficacy is lost or reduced. However, when an active ingredient is suspended too finely, i.e. with too small particle sizes, it will emulsify entirely and will not spread which means that the direct into water application is lost as the active ingredient is not sufficiently spread in the paddy field.
- Another requirement is that rate or dosage of the active ingredient(s) is the same or preferably lower than with current commercial granule and suspension concentrate formulations.

This means that a technically difficult balancing of all these chemical-physical properties needs to be made in order to achieve a composition which can be used by direct application into the water of a paddy field. A further complication are the properties of the active ingredients which are the focus of this invention: chlorantraniliprole which has very low water solubility (1 mg/liter at 20-25°C) and thiamethoxam which has a high water solubility (4100 mg/liter at 20-25°C). Furthermore, thiamethoxam is known to be susceptible to hydrolysis under basic pH 8-14 conditions.

It is the purpose of this application to provide an insecticidal composition which addresses all of the above challenges. Hence, in a first aspect of the invention, as embodiment 1, there is provided an oil suspension concentrate composition comprising
a) from 50 to 200 gram / liter of an active ingredient, wherein the active ingredient comprises chlorantraniliprole;
b) from 100 to 150 gram / liter of a dispersing agent comprising a fatty alcohol ethoxylate, a propylene-oxide/ethylene-oxide block copolymer, a polyvinylpyrrolidone and a naphtalenesulfonic acid salt;
c) from 15 to 35 gram / liter of an emulsifying agent comprising a hydroxystearic acid-polyethylene glycol, an ethoxylated castor oil and a dodecyl benzene sulfonic acid;
d) from 50 to 100 gram/ liter of a thickening agent,
e) from 150 to 250 gram / liter of an adjuvant comprising polyether modified polysiloxane; and
f) the rest an oil being an ester of a fatty acid,
wherein the sum of components adds up to one liter.

The term "oil suspension concentrate composition" according to embodiment 1 means a concentrate where the active ingredient(s) are suspended as solid particles in an oil phase. The oil used in the "oil phase" of the present invention is generally comprised of water-immiscible solvents which are well-known to a skilled person in the art. However, it has been found that for the purpose of this invention esters of fatty acids are particularly suitable.

The term "dispersing agent" according to embodiment 1 means agents which ensure both (i) the long term stability of the oil suspension concentrate and (ii) the stability after the concentrate has been diluted with water or added into the paddy field. In embodiment 1, the amounts and types of dispersing agents is given. This is an essential balance between dispersants which stabilize the oil suspension concentrate and dispersants which stabilitze the suspension after dilution with water, i.e. they prevent flocculation of the solid particles upon dilution with water.

The term "emulsifying agent" according to embodiment 1 means agents are able to emulsify the oil phase into water when the oil suspension concentrate composition is diluted into water. Emulsifiers are selected based upon their ability to spontaneously form this emulsion. Their performance is dictated by the nature of the surfactant and their collective effect on how they arrange themselves at the oil/water interface. The type and amounts of emulsifying agent given in embodiment 1 are a fine balance so as to ensure the oil suspension concentrate emulsifies quickly when added into water but still allows the crucial spreading effect over the whole paddy field.

The term "thickening agent" according to embodiment 1 are an important part of the oil suspension concentrate composition. If the composition is not stabilised effectively the solid active ingredient(s) will sediment forming a hard pack layer preventing re-dispersion. In order to reduce this sedimentation, the viscosity of the composition is increased using a thickening agent.

The term "adjuvant" according to embodiment 1 means an agent which improves the uptake of the active ingredient into the plants. The activity of an adjuvant is dependent on the specific nature of the active ingredient(s). It has been found that polyether modified polysiloxane type adjuvants are particularly suitable for the oil suspension concentrates according to embodiment 1.

The following embodiments represent preferred embodiments of the oil suspension concentrate compositions according to embodiment 1.

As embodiment 2, there is provided the oil suspension concentrate composition according to embodiment 1, wherein the active ingredient further comprises thiamethoxam.

As embodiment 3, there is provided the oil suspension concentrate composition according to embodiment 1 or 2, wherein the pH value of a 1% dilution of the oil suspension concentrate in deionized water at 20°C is between 4.5 and 6.

As embodiment 4, there is provided the oil suspension concentrate composition according to any one of embodiments 1 to 3, wherein the active ingredient comprises chlorantraniliprole and thiamethoxam in a ratio by weight of from 0.75 to 1.25, preferably a ratio by weight is 1 to 1.

As embodiment 5, there is provided the oil suspension concentrate composition according to any one of embodiments 1 to 4, wherein the oil suspension concentrate has a particle size d50 of between 20 to 40 microns, as defined in ISO 13320-1, and a d90 of between 85 and 125 microns as defined in ISO 13320-1.

The particle size distribution of the composition and active ingredient(s) is crucial as it influences the uptake of the active ingredient(s) into the plants. The particle size range in embodiment 5 provides this important balance.

As embodiment 6, there is provided the oil suspension concentrate composition according to any one of embodiments 1 to 5, wherein the dispersion has a density of between 0.9 and 1.1 g/ml (measured using an anton Paar densiometer via the method OECD 109 ).

In order to reduce this sedimentation, the viscosity/density of the composition is increased using a thickening agent. Thus, the density range of embodiment 6 has been determined to determine this property.

As embodiment 7, there is provided a preferred embodiment of the oil suspension concentrate composition according to any one of embodiments 1 to 6, wherein composition comprises
a) from 125 to 175 gram / liter of an active ingredient, wherein the active ingredient comprises chlorantraniliprole and thiamethoxam;
b) from 110 to 130 gram / liter of a dispersing agent comprising an ethoxylated C9-11 alcohol, a propylene-oxide/ethylene-oxide block copolymer with average molecular weight of the poly(propylene oxide) block of the block copolymer molecule is in the range of 1750 to 1850 gram/mol and the weight percentage of the poly(ethylene oxide) block as part of the entire block copolymer molecule is in the range of 15 and 25%, 2-pyrrolidinone-1-ethenyl-homopolymer and naphtalenesulfonic acid sodium salt;
c) from 15 to 35 gram / liter of an emulsifying agent comprising a hydroxystearic acid-polyethylene glycol, ethoxylated castor oil and dodecyl benzene sulfonic acid;
d) from 60 to 80 gram/ liter of a thickening agent comprising modified maize starch, fumed silica and polyethylene glycol 1500;
e) from 175 to 225 gram / liter of a polyether modified polysiloxane; and
f) the rest an oil being an ester of a fatty acid,
wherein the sum of components adds up to one liter.

As embodiment 8, there is provided the oil suspension concentrate composition according to any one of embodiments 1 to 7, wherein the oil suspension concentrate composition according to any one of 1 to 7, wherein the amount of chlorantraniliprole and thiamethoxam, each, is between 70 and 80 gram / liter.

As embodiment 9, there is provided the oil suspension concentrate composition according to any one of embodiments 1 to 8, wherein the amount of ethoxylated C9-11 alcohol is between 70 and 90 gram / liter.

As embodiment 10, there is provided the oil suspension concentrate composition according to any one of embodiments 1 to 9, wherein the amount of propylene-oxide/ethylene-oxide block copolymer with average molecular weight of the poly(propylene oxide) block of the block copolymer molecule is in the range of 1750 to 1850 gram/mol and the weight percentage of the poly(ethylene oxide) block as part of the entire block copolymer molecule is in the range of 15 and 25% is between 15 and 25 gram / liter.

As embodiment 11, there is provided the oil suspension concentrate composition according to any one of embodiments 1 to 10, wherein the amount of 2-pyrrolidinone-1-ethenyl-homopolymer is between 15 and 20 gram / liter.

As embodiment 12, there is provided the oil suspension concentrate composition according to any one of embodiments 1 to 11, wherein the amount of naphtalenesulfonic acid sodium salt is between 8 and 12 gram / liter.

As embodiment 13, there is provided the oil suspension concentrate composition according to any one of embodiments 1 to 12, wherein the amount of hydroxystearic acid-polyethylene glycol is between 5 and 10 gram / liter.

As embodiment 14, there is provided the oil suspension concentrate composition according to any one of embodiments 1 to 13, wherein the amount of ethoxylated castor oil is between 8 and 12 gram / liter.

As embodiment 15, there is provided the oil suspension concentrate composition according to any one of embodiments 1 to 14, wherein the amount of dodecyl benzene sulfonic acid is between 8 and 12 gram / liter.

As embodiment 16, there is provided he oil suspension concentrate composition according to any one of embodiments 1 to 15, wherein the amount of maize starch is between 25 and 30 gram / liter.

As embodiment 17, there is provided the oil suspension concentrate composition according to any one of claims 1 to 16, wherein the amount of fumed silica is between 20 and 30 gram / liter.

As embodiment 18, there is provided the oil suspension concentrate composition according to any one of claims 1 to 17, wherein the amount of polyethylene glycol 1500 is between 15 and 25 gram / liter.

As embodiment 19, there is provided the oil suspension concentrate composition according to any one of claims 1 to 18, wherein the amount of polyether modified polysiloxane is between 175 and 225 gram / liter.

As embodiment 20, there is provided the oil suspension concentrate composition according to any one of claims 1 to 19, wherein the ester of a fatty acid is an oleic acid methyl ester.

Embodiment 21 provides a particularly preferred embodiment of the inventive composition. As embodiment 21, there is provided an oil suspension concentrate composition comprising
a) from 70 to 80 gram / liter of chlorantraniliprole;
b) from 70 to 80 gram / liter of thiamethoxam;
c) from 70 to 90 gram / liter of ethoxylated C9-11 alcohol;
d) from 15 to 25 gram / liter of propylene-oxide/ethylene-oxide block copolymer with average molecular weight of the poly(propylene oxide) block of the block copolymer molecule is in the range of 1750 to 1850 gram/mol and the weight percentage of the poly(ethylene oxide) block as part of the entire block copolymer molecule is in the range of 15 and 25%;
e) from 15 to 20 gram / liter of 2-pyrrolidinone-1-ethenyl-homopolymer;
f) from 8 to 12 gram / liter of naphtalenesulfonic acid sodium salt;
g) from 5 to 10 gram / liter of hydroxystearic acid-polyethylene glycol;
h) from 8 to 12 gram / liter of ethoxylated castor oil;
i) from 8 to 12 gram / liter of dodecyl benzene sulfonic acid;
j) from 25 to 30 gram / liter of maize starch;
k) from 20 to 30 gram / liter of fumed silica;
l) from 15 to 25 gram / liter of polyethylene glycol 1500;
m) from 175 to 225 gram / liter of polyether modified polysiloxane is between 175 and 225 gram / liter;
n) the rest an oil being an oleic acid methyl ester;
wherein the sum of components adds up to one liter.

The present invention also relates to a process for preparing an oil suspension concentrate composition according to any one of embodiments 1 to 21. An oil millbase is first prepared which is milled before being mixed with an oil premix. Hence, as embodiment 22, there is provided a process for manufacturing the oil suspension concentrate composition according to any one of claims 1 to 21, comprising the steps of
(i) preparing of an oil millbase comprising
   - from 150 to 250 gram / liter of an active ingredient, wherein the active ingredient comprises chlorantraniliprole;
   - from 100 to 150 gram / liter of a dispersing agent comprising a fatty alcohol ethoxylate, a propylene-oxide/ethylene-oxide block copolymer, a polyvinylpyrrolidone and a naphtalenesulfonic acid salt;
   - from 20 to 30 gram / liter of an emulsifying agent comprising a hydroxystearic acid-polyethylene glycol, an ethoxylated castor oil and a dodecyl benzene sulfonic acid;
   - from 50 to 75 gram/ liter of a thickening agent comprising maize starch and polyethylene glycol 1500;
   - from 150 to 250 gram / liter of a polyether modified polysiloxane;
   - the rest an oil being an ester of a fatty acid, wherein the sum of components adds up to one liter;
(ii) milling the oil millbase to a particle size distribution d50 of between 20 to 35 microns and a d90 of less than 140 microns;
(iii) preparing an oil premix comprising
   - from 100 to 150 gram / liter of a dispersing agent comprising a fatty alcohol ethoxylate and a propylene-oxide/ethylene-oxide block copolymer;
   - from 20 to 30 gram / liter of an emulsifying agent comprising an ethoxylated castor oil and a dodecyl benzene sulfonic acid;
   - from 200 to 300 gram / liter of a polyether modified polysiloxane;
   - the rest an oil being an ester of a fatty acid, wherein the sum of components adds up to one liter;
(iv) mixing the oil millbase with the oil premix comprising the steps
   - mixing from 75 to 80 gram / liter oil millbase with 20 to 25 gram / liter oil premix;
   - adding 20 to 25 gram / liter of fumed silica to the mixture;
   - the rest an oil being an ester of a fatty acid, wherein the sum of components adds up to one liter.

As embodiment 23, there is provided a process according to embodiment 22, wherein the active ingredient comprises thiamethoxam.

As embodiment 24, there is provided a process according to embodiment 22 or 23, wherein the milling of the oil millbase comprises a pre-milling step on a corundum stone mill.

As embodiment 25, there is provided a process according to any one of embodiments 22 to 24, wherein the milling of the oil millbase is to a particle size distribution d50 of between 20 to 35 microns and a d90 of less than 90 microns.

As embodiment 26, there is provided a method of controlling insect pests which comprises applying to a pest, to a locus of a pest, or to a plant susceptible to attack by a pest an insecticidally effective amount of an oil suspension concentrate composition according to any one of claims 1 to 21.

As embodiment 27, there is provided a method of controlling insect pests in rice paddy fields, comprising applying an oil suspension concentrate composition according to any one of claims 1 to 21 directly into the water.

As embodiment 28, there is provided a method according to embodiment 26 or 27, wherein 0.45 to 0.55 liter of an oil suspension concentrate composition according to any one of embodiments 1 to 21 is applied per 1 hectare rice field.

In an embodiment, present invention makes available a suspoemulsion composition (preferably an emulsion in water) comprising 0.75 to 1.25 parts of an oil suspension concentrate composition according to any one of embodiments 1 to 21, or a composition obtained by any one of embodiments 22 to 25, and 1.75 to 2.25 parts of water.

In an embodiment, there is provided a method according to embodiment 26 or 27, wherein 0.75 to 2.0, preferably 1.25 to 1.75, liter, of a suspoemulsion composition according to the above embodiment is applied per 1 hectare rice field.

In an embodiment of embodiments 26 and 27, the application directly into water is via drone application of a suspoemulsion and the composition is applied per 1 hectare rice field, wherein the suspoemulsion composition comprises 0.25 to 0.75 liter of an oil suspension concentrate composition according to any one of embodiments 1 to 21, or a composition obtained by any one of embodiments 22 to 25 according to the above embodiment and 13 to 17 parts of water.

In an embodiment of the method embodiments of the present invention., the pest is selected from Nilaparvata lugens, Chilo suppressalis, Hydrellia spp, Cnaphalocrocis medinalis, Scirpophaga incertulas, and Scirpophaga innotata.

A person skilled in the art of agrochemical formulations is aware of the different types of co-formulants mentioned in above embodiments. Examples of such co-formulants are commercially available under the tradenames Synperonic^{®}, Tersperse^{®}, Ultrasperse 2000^{®}, Hypermer^{®} B246, PVP K-90, PEG 1500, Break-Thru^{®}, Emulsogen^{®}, Nansa^{®}, Atlox^{®}, Aerosil^{®}, Emerset^{®} and Agnique^{®}.

### Experimental:

Application of an oil suspension concentrate composition according to the invention has been tested in a trial in Changsha, China. The trial was carried out in a rice paddy field of 20 m² and the oil suspension concentrate according to the invention was compared with conventional foliar sprayable suspension concentrates, i.e. spinetoram SC120 (120 gram / liter), and granule formulations, i.e. chlorantraniliprole GR0.4 (0.4% w/w chlorantraniliprole). The percentage control of *Chilo sp.* (rice stem borer) and rice leaf folder has been measured 22 DAT (days after treatment) and additionally at 16 and 30 DAT for the oil suspension concentrate according to the invention.

The composition of the oil suspension concentrate was as follows:

| **Component** | **Role** | **gram / liter** |
|---|---|---|
| Thiamethoxam | Active ingredient | 77.43 |
| Chlorantraniliprole | Active ingredient | 77.43 |
| Naphthalenesulfonic acid | Dispersant | 9.68 |
| Maize starch | Thickener | 27.1 |
| Propylene oxide/ethylene oxide copolymer | Dispersant | 19.36 |
| Block copolymer of polyhydroxystearic acid and polyalkylene glycols | Emulsifier | 7.74 |
| 2-Pyrrolidinone, 1-ethenyl-, homopolymer | Dispersant | 17.43 |
| Polyethylene glycol 1500 | Thickener | 19.36 |
| Polyether modified polysiloxane | Adjuvant | 193.58 |
| Alcohols ethyoxylated C9-C11 | Dispersant | 77.43 |
| Condensation product of castor oil and ethylene-oxide | Emulsifier | 9.68 |
| Silica, hydrophobe | Thickener | 25.63 |
| Dedecyl-benzene sulfonic acid Ca-salt linear | Emulsifier | 9.68 |
| Unsaturated fatty acid methyester | Solvent | Up to 1 liter |
| TOTAL | | 1 liter |

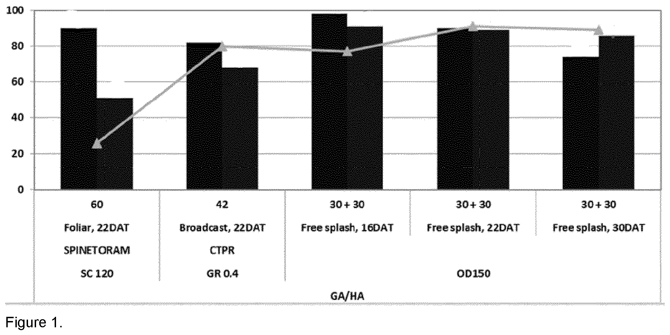

Figure 1 shows the results of the trail. The "Free splash" results represent the composition according to the invention, "Foliar" are the results using the Spinetoram SC120 formulation (commercial product) and "Broadcast" are the results using the GR0.4 Chlorantraniliprole (CTPR) formulation (commercial product). The first and second columns represent the % control against the rice stem borer (RSB), the triangles represent the % control against the rice leaf folder (RLF). The first and second columns represent the % control of RSB after 10 days and 18 days of appearance of RSB, respectively, in the paddy field and the triangles represents the % control of RLF after 18 days of appearance of RLF. The results demonstrate that the "free splash" formulation according to the invention exhibits better control of RSB and RLF than conventional commercial products.

Table 1 provides the pH and particle size measurements over four weeks for the oil suspension concentrate in the table above. Malver Mastersizer 2000 was used to determine the particle size distribution.

**Table 1:**

| Storage Stability | pH (1% in Deionised water)¹ | Particle Size by Malvern MS2000 | |
|---|---|---|---|
| | | d50 | d90 |
| Initial | 5.4 | 37.607 | 124.086 |
| 2wks at 54°C | 5.14 | 33.299 | 120.333 |
| 4wks at 54°C | 5 | 36.676 | 122.722 |

| | | | |
|---|---|---|---|
| 1.CIPAC method MT 75.3 (https://cipac.org/index.php/p9/448-mt-75-3-determination-of-ph-values) | | | |

Table 2 provides the suspension stability measurements of two and four weeks for oil the suspension concentrate at 54°C in the table above. The concentrate was tested for its suspensibility using a test based on CIPAC method MT 180 (https://www.cipac.org/index.php/d35/339-mt-180-dispersion-stability-of-suspo-emulsions) by observation of the disposition of the dispersed product at 1% dilution after ½ hr maintained at 30°C in a centrifuge tube for better visibility.

**Table 2:**

| Storage Stability | Viscosity | Suspension stability (1/2 hr) | |
|---|---|---|---|
| | | 1%w/w CIPAC A Water | 1%w/w CIPAC D Water |
| Initial | 560cps | < 0.05 ml | < 0.05 ml |
| 2wks at 54°C | 960 cps | 0.05 ml | 0.05 ml |
| 4wks at 54°C | 980 cps | 0.05 ml | 0.05 ml |

## Claims

1. An oil suspension concentrate composition comprising
a) from 50 to 200 gram / liter of an active ingredient, wherein the active ingredient comprises chlorantraniliprole;
b) from 100 to 150 gram / liter of a dispersing agent comprising a fatty alcohol ethoxylate, a propylene-oxide/ethylene-oxide block copolymer, a polyvinylpyrrolidone and a naphtalenesulfonic acid salt;
c) from 15 to 35 gram / liter of an emulsifying agent comprising a hydroxystearic acid-polyethylene glycol, an ethoxylated castor oil and a dodecyl benzene sulfonic acid;
d) from 50 to 100 gram/ liter of a thickening agent,
e) from 150 to 250 gram / liter of a polyether modified polysiloxane; and
f) the rest an oil being an ester of a fatty acid,
wherein the sum of components adds up to one liter.

2. The oil suspension concentrate composition according to claim 1, wherein the pH value of a 1% dilution of the oil suspension concentrate in deionized water at 20°C is between 4.5 and 6.

3. The oil suspension concentrate composition according to claim 1 or claim 2, wherein the active ingredient comprises chlorantraniliprole and thiamethoxam, and the ratio by weight of chlorantraniliprole to thiamethoxam is from 0.75 to 1.25.

4. The oil suspension concentrate composition according to any one of claims 1 to 3, wherein the oil suspension concentrate has a particle size d50 of between 20 to 35 microns and a d90 of less than 140 microns, preferably d90 of less than 90 microns.

5. The oil suspension concentrate composition according to any one of claims 1 to 4, wherein the dispersion has a density of between 0.9 and 1.1 g/ml.

6. The oil suspension concentrate composition according to any one of claims 1 to 5, wherein the composition comprises
a) from 125 to 175 gram / liter of an active ingredient, wherein the active ingredient comprises chlorantraniliprole and thiamethoxam;
b) from 110 to 130 gram / liter of a dispersing agent comprising an ethoxylated C9-11 alcohol, a propylene-oxide/ethylene-oxide block copolymer with average molecular weight of the poly(propylene oxide) block of the block copolymer molecule is in the range of 1750 to 1850 gram/mol and the weight percentage of the poly(ethylene oxide) block as part of the entire block copolymer molecule is in the range of 15 and 25%, 2-pyrrolidinone-1-ethenyl-homopolymer and naphtalenesulfonic acid sodium salt;
c) from 15 to 35 gram / liter of an emulsifying agent comprising a hydroxystearic acid-polyethylene glycol, ethoxylated castor oil and dodecyl benzene sulfonic acid;
d) from 60 to 80 gram/ liter of a thickening agent comprising maize starch, fumed silica and polyethylene glycol 1500;
e) from 175 to 225 gram / liter of a polyether modified polysiloxane; and
f) the rest an oil being an ester of a fatty acid,
wherein the sum of components adds up to one liter.

7. An oil suspension concentrate composition comprising
a) from 70 to 80 gram / liter of chlorantraniliprole;
b) from 70 to 80 gram / liter of thiamethoxam;
c) from 70 to 90 gram / liter of ethoxylated C9-11 alcohol;
d) from 15 to 25 gram / liter of propylene-oxide/ethylene-oxide block copolymer with average molecular weight of the poly(propylene oxide) block of the block copolymer molecule is in the range of 1750 to 1850 gram/mol and the weight percentage of the poly(ethylene oxide) block as part of the entire block copolymer molecule is in the range of 15 and 25%;
e) from 15 to 20 gram / liter of 2-pyrrolidinone-1-ethenyl-homopolymer;
f) from 8 to 12 gram / liter of naphtalenesulfonic acid sodium salt;
g) from 5 to 10 gram / liter of hydroxystearic acid-polyethylene glycol;
h) from 8 to 12 gram / liter of ethoxylated castor oil;
i) from 8 to 12 gram / liter of dodecyl benzene sulfonic acid;
j) from 25 to 30 gram / liter of maize starch;
k) from 20 to 30 gram / liter of fumed silica;
l) from 15 to 25 gram / liter of polyethylene glycol 1500;
m) from 175 to 225 gram / liter of polyether modified polysiloxane is between 175 and 225 gram / liter;
n) the rest an oil being an oleic acid methyl ester;
wherein the sum of components adds up to one liter.

8. A process for manufacturing the oil suspension concentrate composition according to any one of claims 1 to 7, comprising the steps of
(v) preparing of an oil millbase comprising
- from 150 to 250 gram / liter of an active ingredient, wherein the active ingredient comprises chlorantraniliprole and optionally thiamethoxam;
- from 100 to 150 gram / liter of a dispersing agent comprising a fatty alcohol ethoxylate, a propylene-oxide/ethylene-oxide block copolymer, a polyvinylpyrrolidone and a naphtalenesulfonic acid salt;
- from 20 to 30 gram / liter of an emulsifying agent comprising a hydroxystearic acid-polyethylene glycol, an ethoxylated castor oil and a dodecyl benzene sulfonic acid;
- from 50 to 75 gram/ liter of a thickening agent comprising maize starch and polyethylene glycol 1500;
- from 150 to 250 gram / liter of a polyether modified polysiloxane;
- the rest an oil being an ester of a fatty acid, wherein the sum of components adds up to one liter;
(vi) milling the oil millbase to a particle size distribution d50 of between 20 to 35 microns and a d90 of less than 140 microns;
(vii) preparing an oil premix comprising
- from 100 to 150 gram / liter of a dispersing agent comprising a fatty alcohol ethoxylate and a propylene-oxide/ethylene-oxide block copolymer;
- from 20 to 30 gram / liter of an emulsifying agent comprising an ethoxylated castor oil and a dodecyl benzene sulfonic acid;
- from 200 to 300 gram / liter of a polyether modified polysiloxane;
- the rest an oil being an ester of a fatty acid, wherein the sum of components adds up to one liter;
(viii) mixing the oil millbase with the oil premix comprising the steps
- mixing from 75 to 80 gram / liter oil millbase with 20 to 25 gram / liter oil premix;
- adding 20 to 25 gram / liter of fumed silica to the mixture;
- the rest an oil being an ester of a fatty acid, wherein the sum of components adds up to one liter.

9. The process according to claim 8, wherein the milling of the oil millbase comprises a pre-milling step on a corundum stone mill.

10. The process according to either claim 8 or claim 9, wherein the milling of oil millbase to a particle size distribution d50 of between 20 to 35 microns and a d90 of less than 90 microns.

11. A suspoemulsion composition comprising 0.75 to 1.25 parts of an oil suspension concentrate composition according to any one of claims 1 to 7, or a composition obtained by any one of claims 7 to 10, and 1.75 to 2.25 parts of water.

12. A method of controlling insect pests in rice paddy fields, comprising applying an oil suspension concentrate composition according to any one of claims 1 to 7, or a composition obtained by any one of claims 8 to 10, or a suspoemulsion according to claim 11, directly into the water.

13. The method according to claim 12, wherein 0.45 to 0.55 liter of a composition comprising an oil suspension concentrate composition according to any one of claims 1 to 7, or a composition obtained by any one of claims 7 to 10, or a suspoemulsion according to claim 11, is applied per 1 hectare rice field.

14. The method according to any one of claims 11 to 13, wherein the pest is selected from Nilaparvata lugens, Chilo suppressalis, Hydrellia spp, Cnaphalocrocis medinalis, Scirpophaga incertulas, and Scirpophaga innotata.

## Patentansprüche

1. Ölsuspensionskonzentratzusammensetzung, umfassend
a) 50 bis 200 Gramm/Liter eines Wirkstoffs, wobei der Wirkstoff Chlorantraniliprol umfasst,
b) 100 bis 150 Gramm/Liter eines Dispergiermittels, das ein Fettalkoholethoxylat, ein Propylenoxid-Ethylenoxid-Blockcopolymer, ein Polyvinylpyrrolidon und ein Naphthalinsulfonsäuresalz umfasst,
c) 15 bis 35 Gramm/Liter eines Emulgators, der ein Hydroxystearinsäure-Polyethylenglykol, ein ethoxyliertes Rizinusöl und eine Dodecylbenzolsulfonsäure umfasst,
d) 50 bis 100 Gramm/Liter eines Verdickungsmittels,
e) 150 bis 250 Gramm/Liter eines polyethermodifizierten Polysiloxans, wobei
f) der Rest ein Öl, bei dem es sich um einen Ester einer Fettsäure handelt, ist,
wobei sich die Summe der Komponenten ein Liter beträgt.

2. Ölsuspensionskonzentratzusammensetzung nach Anspruch 1, wobei der pH-Wert einer 1%igen Verdünnung des Ölsuspensionskonzentrats in vollentsalztem Wasser bei 20 °C zwischen 4,5 und 6 liegt.

3. Ölsuspensionskonzentratzusammensetzung nach Anspruch 1 oder Anspruch 2, wobei der Wirkstoff Chlorantraniliprol und Thiamethoxam umfasst und das Gewichtsverhältnis von Chlorantraniliprol zu Thiamethoxam 0,75 bis 1,25 beträgt.

4. Ölsuspensionskonzentratzusammensetzung nach einem der Ansprüche 1 bis 3, wobei das Ölsuspensionskonzentrat eine Teilchengröße d50 zwischen 20 und 35 Mikron und eine d90 von weniger als 140 Mikron, vorzugsweise eine d90 von weniger als 90 Mikron, aufweist.

5. Ölsuspensionskonzentratzusammensetzung nach einem der Ansprüche 1 bis 4, wobei die Dispersion eine Dichte zwischen 0,9 und 1,1 g/ml aufweist.

6. Ölsuspensionskonzentratzusammensetzung nach einem der Ansprüche 1 bis 5, wobei dei Zusammensetzung Folgendes umfasst:
a) 125 bis 175 Gramm/Liter eines Wirkstoffs, wobei der Wirkstoff Chlorantraniliprol und Thiamethoxam umfasst,
b) 110 bis 130 Gramm/Liter eines Dispergiermittels, das einen ethoxylierten C9-11-Alkohol, ein Propylenoxid-Ethylenoxid-Blockcopolymer mit einem mittleren Molekulargewicht des Poly(propylenoxid)-Blocks des Blockcopolymermoleküls im Bereich von 1750 bis 1850 g/mol und einem Gewichtsprozentanteil des Poly(ethylenoxid)-Blocks als Teil des gesamten Blockcopolymermoleküls im Bereich von 15 und 25 %, 2-Pyrrolidinon-1-ethenyl-Homopolymer und Naphthalinsulfonsäure-Natriumsalz umfasst,
c) 15 bis 35 Gramm/Liter eines Emulgators, der ein Hydroxystearinsäure-Polyethylenglykol, ethoxyliertes Rizinusöl und Dodecylbenzolsulfonsäure umfasst,
d) 60 bis 80 Gramm/Liter eines Verdickungsmittels, das Maisstärke, pyrogene Kieselsäure und Polyethylenglykol 1500 umfasst,
e) 175 bis 225 Gramm/Liter eines polyethermodifizierten Polysiloxans, wobei
f) der Rest ein Öl ist, bei dem es sich um einen Ester einer Fettsäure handelt,
wobei sich die Summe der Komponenten ein Liter beträgt.

7. Ölsuspensionskonzentratzusammensetzung, umfassend
a) 70 bis 80 Gramm/Liter Chlorantraniliprol,
b) 70 bis 80 Gramm/Liter Thiamethoxam,
c) 70 bis 90 Gramm/Liter ethoxylierten C9-11-Alkohol,
d) 15 bis 25 Gramm/Liter Propylenoxid-Ethylenoxid-Blockcopolymer, wobei das mittlere Molekulargewicht des Poly(propylenoxid)-Blocks des Blockcopolymermoleküls im Bereich von 1750 bis 1850 Gramm/mol liegt und der Gewichtsprozentanteil des Poly(ethylenoxid)-Blocks als Teil des gesamten Blockcopolymermoleküls im Bereich von 15 und 25 % liegt,
e) 15 bis 20 Gramm/Liter 2-Pyrrolidinon-1-ethenyl-Homopolymer,
f) 8 bis 12 Gramm/Liter Naphtalinsulfonsäure-Natriumsalz,
g) 5 bis 10 Gramm/Liter Hydroxystearinsäure-Polyethylenglykol,
h) 8 bis 12 Gramm/Liter ethoxyliertes Rizinusöl,
i) 8 bis 12 Gramm/Liter Dodecylbenzolsulfonsäure,
i) 25 bis 30 Gramm/Liter Maisstärke,
k) 20 bis 30 Gramm/Liter pyrogene Kieselsäure,
l) 15 bis 25 Gramm/Liter Polyethylenglykol 1500,
m) 175 bis 225 Gramm/Liter polyethermodifiziertes Polysiloxan, wobei
n) der Rest ein Öl ist, bei dem es sich um einen Ölsäuremethylester handelt,
wobei sich die Summe der Komponenten ein Liter beträgt.

8. Verfahren zur Herstellung der Ölsuspensionskonzentratzusammensetzung nach einem der Ansprüche 1 bis 7, welches die folgenden Schritte umfasst:
(v) die Herstellung einer Ölmahlgrundlage, umfassend
- 150 bis 250 Gramm/Liter eines Wirkstoffs, wobei der Wirkstoff Chlorantraniliprol und gegebenenfalls Thiamethoxam umfasst,
- 100 bis 150 Gramm/Liter eines Dispergiermittels, das ein Fettalkoholethoxylat, ein Propylenoxid-Ethylenoxid-Blockcopolymer, ein Polyvinylpyrrolidon und ein Naphtalinsulfonsäuresalz umfasst,
- 20 bis 30 Gramm/Liter eines Emulgators, der ein Hydroxystearinsäure-Polyethylenglykol, ein ethoxyliertes Rizinusöl und eine Dodecylbenzolsulfonsäure umfasst,
- 50 bis 75 Gramm/Liter eines Verdickungsmittels, das Maisstärke und Polyethylenglykol 1500 umfasst,
- 150 bis 250 Gramm/Liter eines polyethermodifizierten Polysiloxans, wobei
- der Rest ein Öl ist, bei dem es sich um einen Ester einer Fettsäure handelt, wobei sich die Summe der Komponenten ein Liter beträgt,
(vi) das Mahlen der Ölmahlgrundlage auf eine Teilchengrößenverteilung d50 zwischen 20 und 35 Mikron und eine d90 von weniger als 140 Mikron,
(vii) das Herstellen einer Ölvormischung, umfassend
- 100 bis 150 Gramm/Liter eines Dispergiermittels, das ein Fettalkoholethoxylat und ein Propylenoxid-Ethylenoxid-Blockcopolymer umfasst,
- 20 bis 30 Gramm/Liter eines Emulgators, der ein ethoxyliertes Rizinusöl und eine Dodecylbenzolsulfonsäure umfasst,
- 200 bis 300 Gramm/Liter eines polyethermodifizierten Polysiloxans, wobei
- der Rest ein Öl ist, bei dem es sich um einen Ester einer Fettsäure handelt, wobei sich die Summe der Komponenten ein Liter beträgt,
(viii) das Mischen der Ölmahlgrundlage mit der Ölvormischung, welches die folgenden Schritte umfasst:
- das Mischen von 75 bis 80 Gramm/Liter Ölmahlgrundlage mit 20 bis 25 Gramm/Liter Ölvormischung,
- die Zugabe von 20 bis 25 Gramm/Liter pyrogener Kieselsäure zu der Mischung, wobei
- der Rest ein Öl ist, bei dem es sich um einen Ester einer Fettsäure handelt, wobei sich die Summe der Komponenten ein Liter beträgt.

9. Verfahren nach Anspruch 8, wobei das Mahlen der Ölmahlgrundlage einen Vormahlschritt auf einer Korundsteinmühle umfasst.

10. Verfahren nach Anspruch 8 oder Anspruch 9, wobei das Mahlen der Ölmahlgrundlage auf eine Teilchengrößenverteilung d50 zwischen 20 bis 35 Mikron und eine d90 von weniger als 90 Mikron erfolgt.

11. Suspoemulsionszusammensetzung, umfassend 0,75 bis 1,25 Teile einer Ölsuspensionskonzentratzusammensetzung nach einem der Ansprüche 1 bis 7 oder einer Zusammensetzung, die nach einem der Ansprüche 7 bis 10 erhalten wird, und 1,75 bis 2,25 Teile Wasser.

12. Verfahren zur Bekämpfung von Schadinsekten in Reisfeldern, umfassend das Ausbringen einer Ölsuspensionskonzentratzusammensetzung nach einem der Ansprüche 1 bis 7 oder einer Zusammensetzung, die nach einem der Ansprüche 8 bis 10 erhalten wird, oder einer Suspoemulsion nach Anspruch 11 direkt in das Wasser.

13. Verfahren nach Anspruch 12, wobei 0,45 bis 0,55 Liter einer Zusammensetzung, die eine Ölsuspensionskonzentratzusammensetzung nach einem der Ansprüche 1 bis 7 oder eine nach einem der Ansprüche 7 bis 10 erhaltene Zusammensetzung oder eine Suspoemulsion nach Anspruch 11 umfasst, auf 1 Hektar Reisfeld ausgebracht werden.

14. Verfahren nach einem der Ansprüche 11 bis 13, wobei der Schädling aus Nilaparvata lugens, Chilo suppressalis, Hydrellia spp, Cnaphalocrocis medinalis, Scirpophaga incertulas und Scirpophaga innotata ausgewählt ist.

## Revendications

1. Composition de concentré de suspension d'huile, comprenant
a) de 50 à 200 grammes / litre d'un ingrédient actif, dans lequel l'ingrédient actif comprend du chlorantraniliprole ;
b) de 100 à 150 grammes / litre d'un agent dispersant comprenant un éthoxylate d'alcool gras, un copolymère séquencé oxyde de propylène/oxyde d'éthylène, une polyvinylpyrrolidone et un sel d'acide naphtalènesulfonique ;
c) de 15 à 35 grammes / litre d'un agent émulsifiant comprenant un acide hydroxystéarique-polyéthylène glycol, une huile de ricin éthoxylée et un acide dodécylbenzène sulfonique ;
d) de 50 à 100 grammes / litre d'un agent épaississant ;
e) de 150 à 250 grammes / litre d'un polysiloxane modifié par polyéther ; et
f) le reste étant une huile qui est un ester d'un acide gras,
où la somme des composants totalise un litre.

2. Composition de concentré de suspension d'huile selon la revendication 1, dans laquelle la valeur de pH d'une dilution à 1% du concentré de suspension d'huile dans de l'eau désionisée à 20 °C est comprise entre 4,5 et 6.

3. Composition de concentré de suspension d'huile selon la revendication 1 ou la revendication 2, dans laquelle l'ingrédient actif comprend du chlorantraniliprole et du thiaméthoxame, et le rapport pondéral de chlorantraniliprole sur thiaméthoxame est de 0,75 à 1,25.

4. Composition de concentré de suspension d'huile selon l'une quelconque des revendications 1 à 3, dans laquelle le concentré de suspension d'huile a une taille de particule d50 comprise entre 20 et 35 microns et un d90 inférieur à 140 microns, de préférence un d90 inférieur à 90 microns.

5. Composition de concentré de suspension d'huile selon l'une quelconque des revendications 1 à 4, dans laquelle la dispersion a une densité comprise entre 0,9 et 1,1 g/ml.

6. Composition de concentré de suspension d'huile selon l'une quelconque des revendications 1 à 5, la composition comprenant
a) de 125 à 175 grammes / litre d'un ingrédient actif, dans lequel l'ingrédient actif comprend du chlorantraniliprole et du thiaméthoxame ;
b) de 110 à 130 grammes / litre d'un agent dispersant comprenant un alcool en C9-11 éthoxylé, un copolymère séquencé oxyde de propylène/oxyde d'éthylène comportant un poids moléculaire moyen du bloc de poly(oxyde de propylène) de la molécule de copolymère séquencé étant dans la plage de 1 750 à 1 850 grammes/mole et le pourcentage pondéral du bloc de poly(oxyde de d'éthylène) faisant partie de la molécule de copolymère séquencé entière étant dans la plage de 15 à 25 %, un homopolymèrede 2-pyrrolidinone-1-éthényle et un sel de sodium d'acide naphtalènesulfonique ;
c) de 15 à 35 grammes / litre d'un agent émulsifiant comprenant un acide hydroxystéarique-polyéthylène glycol, une huile de ricin éthoxylée et de l'acide dodécylbenzène sulfonique ;
d) de 60 à 80 grammes / litre d'un agent épaississant comprenant de l'amidon de maïs, de la silice fumée et du polyéthylène glycol 1500 ;
e) de 175 à 225 grammes / litre d'un polysiloxane modifié par polyéther ; et
f) le reste étant une huile qui est un ester d'un acide gras,
où la somme des composants totalise un litre.

7. Composition de concentré de suspension d'huile, comprenant
a) de 70 à 80 grammes / litre de chlorantraniliprole ;
b) de 70 à 80 grammes / litre de thiaméthoxame ;
c) de 70 à 90 grammes / litre d'alcool en C9-11 éthoxylé ;
d) de 15 à 25 grammes / litre de copolymère séquencé oxyde de propylène/oxyde d'éthylène comportant un poids moléculaire moyen du bloc de poly(oxyde de propylène) de la molécule de copolymère séquencé étant dans la plage de 1 750 à 1 850 grammes/mole, et le pourcentage pondéral du bloc de poly(oxyde d'éthylène) faisant partie de la molécule de copolymère séquencé entière étant dans la plage de 15 à 25 % ;
e) de 15 à 20 grammes / litre d'homopolymère de 2-pyrrolidinone-1-éthényle ;
f) de 8 à 12 grammes / litre de sel de sodium d'acide naphtalènesulfonique ;
g) de 5 à 10 grammes / litre d'acide hydroxystéarique-polyéthylène glycol ;
h) de 8 à 12 grammes / litre d'huile de ricin éthoxylée ;
i) de 8 à 12 grammes / litre d'acide dodécylbenzène sulfonique ;
j) de 25 à 30 grammes / litre d'amidon de maïs ;
k) de 20 à 30 grammes / litre de silice fumée ;
l) de 15 à 25 grammes / litre de polyéthylène glycol 1500 ;
m) de 175 à 225 grammes / litre de polysiloxane modifié par polyéther est compris entre 175 et 225 grammes / litre ;
n) le reste étant une huile qui est un ester méthylique d'acide oléique ;
où la somme des composants totalise un litre.

8. Procédé pour la fabrication de la composition de concentré de suspension d'huile selon l'une quelconque des revendications 1 à 7, comprenant les étapes de (v) préparation d'une base de broyage d'huile comprenant
- de 150 à 250 grammes / litre d'un ingrédient actif, dans lequel l'ingrédient actif comprend du chlorantraniliprole et éventuellement du thiaméthoxame ;
- de 100 à 150 grammes / litre d'un agent dispersant comprenant un éthoxylate d'alcool gras, un copolymère séquencé oxyde de propylène/oxyde d'éthylène, une polyvinylpyrrolidone et un sel d'acide naphtalènesulfonique ;
- de 20 à 30 grammes / litre d'un agent émulsifiant comprenant un acide hydroxystéarique-polyéthylène glycol, une huile de ricin éthoxylée et un acide dodécylbenzène sulfonique ;
- de 50 à 75 grammes / litre d'un agent épaississant comprenant de l'amidon de maïs et du polyéthylène glycol 1500 ;
- de 150 à 250 grammes / litre d'un polysiloxane modifié par polyéther ;
- le reste étant une huile qui est un ester d'un acide gras, où la somme des composants totalise un litre ;
(vi) broyage de la base de broyage d'huile jusqu'à obtenir une distribution granulométrique d50 comprise entre 20 et 35 microns et une distribution granulométrique d90 inférieure à 140 microns ;
(vii) préparation d'un prémélange d'huile comprenant
- de 100 à 150 grammes / litre d'un agent dispersant comprenant un éthoxylate d'alcool gras et un copolymère séquencé oxyde de propylène/oxyde d'éthylène ;
- de 20 à 30 grammes / litre d'un agent émulsifiant comprenant une huile de ricin éthoxylée et un acide dodécylbenzène sulfonique ;
- de 200 à 300 grammes / litre d'un polysiloxane modifié par polyéther ;
- le reste étant une huile qui est un ester d'un acide gras, où la somme des composants totalise un litre ;
(viii) mélange de la base de broyage d'huile avec le prémélange d'huile comprenant les étapes de
- mélange de 75 à 80 grammes / litre de base de broyage d'huile avec 20 à 25 grammes / litre de prémélange d'huile ;
- ajout de 20 à 25 grammes / litre de silice fumée au mélange ;
- le reste étant une huile qui est un ester d'un acide gras, où la somme des composants totalise un litre.

9. Procédé selon la revendication 8, dans lequel le broyage de la base de broyage d'huile comprend une étape de pré-broyage sur une meule de corindon.

10. Procédé selon la revendication 8 ou la revendication 9, dans lequel le broyage de la base de broyage d'huile à une distribution granulométrique d50 comprise entre 20 et 35 microns et une distribution granulométrique d90 inférieure à 90 microns.

11. Composition de suspoémulsion comprenant 0,75 à 1,25 partie d'une composition de concentré de suspension d'huile selon l'une quelconque des revendications 1 à 7, ou une composition obtenue selon l'une quelconque des revendications 7 à 10, et 1,75 à 2,25 parties d'eau.

12. Procédé de lutte contre les insectes nuisibles dans les rizières, comprenant l'application d'une composition de concentré de suspension d'huile selon l'une quelconque des revendications 1 à 7, ou d'une composition obtenue par l'une quelconque des revendications 8 à 10, ou d'une suspoémulsion selon la revendication 11, directement dans l'eau.

13. Procédé selon la revendication 12, dans lequel 0,45 à 0,55 litre d'une composition comprenant une composition de concentré de suspension d'huile selon l'une quelconque des revendications 1 à 7, ou une composition obtenue par l'une quelconque des revendications 7 à 10, ou une suspoémulsion selon la revendication 11, est appliquée par 1 hectare de rizière.

14. Procédé selon l'une quelconque des revendications 11 à 13, dans lequel le parasite est choisi parmi Nilaparvata lugens, Chilo suppressalis, Hydrellia spp, Cnaphalocrocis medinalis, Scirpophaga incertulas, et Scirpophaga innotata.
